# EUROPEAN PATENT SPECIFICATION

(11) **EP 3 800 589 B1**
(45) Date of publication and mention of the grant of the patent: **28.05.2025**
(21) Application number: 19825972.3
(22) Date of filing: 05.05.2019
(51) Int. Cl.: G06N 5/04, G06F 9/50, G06N 3/06

(54) **TASK PROCESSING METHOD AND APPARATUS**
VERFAHREN UND VORRICHTUNG ZUR AUFGABENVERARBEITUNG
PROCÉDÉ ET APPAREIL DE TRAITEMENT DE TÂCHES

(30) Priority: 29.06.2018 CN 201810722181
(43) Date of publication of application: 07.04.2021
(73) Proprietor: HUAWEI TECHNOLOGIES CO., LTD., Shenzhen, Guangdong 518129 (CN)
(72) Inventor: PAN, Xiaogang, Shenzhen, Guangdong 518129 (CN); ZHOU, Chao, Shenzhen, Guangdong 518129 (CN)
(74) Representative: MERH-IP Matias Erny Reichl Hoffmann Patentanwälte PartG mbB
(86) International application number: PCT/CN2019/085507
(87) International publication number: WO 2020/001161

(56) References cited:
- CN-A- 101 741 912
- CN-A- 106 257 960
- CN-A- 106 445 686
- CN-A- 107 135 257
- US-A- 6 016 393
- SAYED CHHATTAN SHAH ET AL: "Resource Allocation Scheme to Minimize Communication Cost in Mobile Ad Hoc Computational Grids", INTELLIGENT NETWORKING AND COLLABORATIVE SYSTEMS (INCOS), 2010 2ND INTERNATIONAL CONFERENCE ON, IEEE, 24 November 2010 (2010-11-24), pages 169 - 176, XP031885913, ISBN: 978-1-4244-8828-5, DOI: 10.1109/INCOS.2010.26
- TEO RHUN MING ET AL: "Calibration on Co-located Ad-Hoc Multi Mobile System", INDONESIA 2016, ACM, 2 PENN PLAZA, SUITE 701 NEW YORK NY 10121-0701 USA, 13 April 2016 (2016-04-13), pages 62 - 68, XP058081588, ISBN: 978-1-4503-4044-1, DOI: 10.1145/2898459.2898468

## Description

### TECHNICAL FIELD

This application relates to the field of data processing technologies, and in particular, to a task processing method and apparatus.

### BACKGROUND

With the expansion of artificial intelligence, AI, application scenarios, the mining of AI algorithms, especially a deep learning algorithm, and the development of AI computing capabilities (or techniques), AI is gradually spreading to all aspects of life.

A collaborative computing (collaborative computing) function is different from a conventional function of computing by a single device, and may be specifically understood as a function that enables a plurality of devices (such as devices in different areas and a plurality of devices of different types) to collaboratively work together for a specific task based on a collaborative computing environment that is formed based on one or more technologies of a computer network technology, a communications technology, a multimedia technology, a groupware technology, and the like.

Currently, a collaborative computing solution used to execute an AI task is a device-cloud based AI collaborative computing solution. Device-cloud collaboration may be understood as combining a terminal device used by a user and a cloud data center, to use a powerful processing capability of the cloud data center to assist the terminal device in data analysis and processing. The cloud data center is a device with a powerful computing function, or a device cluster with a powerful computing function formed by a plurality of devices. A core idea of the device/cloud-based AI collaborative computing solution is that a part of the AI task is executed locally on a terminal, and the other part of the AI task is executed on a cloud (namely, the cloud data center). In this way, a computing capability presented by the terminal may be extended. However, because the other part of the task executed on the cloud needs to be sent from the terminal to the cloud through a plurality of networks, and an execution result of the other part of the task also needs to be fed back by the cloud to the terminal through the plurality of networks. This may cause a relatively long forwarding latency.

Document SAYED CHHATTAN SHAH ET AL, "Resource Allocation Scheme to Minimize Communication Cost in Mobile Ad Hoc Computational Grids", INTELLIGENT NETWORKING AND COLLABORATIVE SYSTEMS (INCOS), 2010 2ND INTERNATIONAL CONFERENCE ON, IEEE, 24 November 2010, pages 169 - 176 generally proposes a centralized resource allocation scheme that allocates dependent tasks among nodes in mobile ad hoc computational grids.

Document CN 106 257 960 A generally discloses a method for multi-equipment collaborative operation and equipment including the steps that network connection is established with one or more pieces of slave equipment, and equipment resource information of the slave equipment and master equipment is acquired; input operation of a user is acquired, a task event is generated, and the task event is decomposed into subtasks according to the equipment resource information; the subtasks are sent to the corresponding slave equipment to be executed; the executing result sent by the slave equipment is received.

### SUMMARY

This application provides a task processing method and apparatus, to reduce a forwarding latency, specifically, to reduce a forwarding latency of a task and a forwarding latency of an execution result of the task. In particular, there is provided a task processing method, a first device, a computer program product and a computer-readable storage medium, having the features of respective independent claims. The embodiments are defined in the dependent claims. According to a first aspect, this application provides a task processing method. The method may include: when a first device determines that an available computing resource of the first device is less than a computing resource required by an AI task group, selecting at least one second device from a valid device in a first area; sending, by the first device, a task in the to-be-executed AI task group to each of the at least one second device; and receiving, by the first device, an execution result of the task sent from the second device. The first area is an area that uses the first device as a center and a valid communication distance of the first device as a radius, and the valid device in the first area is a collaborative computing device that is in the first area and that is connected to the first device. The to-be-executed AI task group includes at least one AI task. If the to-be-executed AI task group includes at least two AI tasks, the sent task is some of the at least two AI tasks, or if the to-be-executed AI task group includes one AI task, the sent task is some subtasks of the one AI task. In this technical solution, the first device and the at least one second device collaboratively execute the AI task group. Because the second device is in the area that uses the first device as the circle center and the valid communication distance of the first device as the radius, compared with a technical solution in the prior art in which the first device and the device/cloud collaboratively execute the AI task (or the AI task group), in this method, a distance from the first device to the second device of the task executed by the second device and a distance from the second device to the first device of an execution result of the task are relatively short. Therefore, a forwarding latency is relatively short.

For example, the available computing resource of the first device may include an idle computing resource of the first device and/or a computing resource used by the first device to collaboratively execute an AI task triggered by another device.

The valid communication distance of the first device is a maximum distance between a device sending a signal and the first device when strength of the signal received by the first device is greater than or equal to preset strength.

The at least one second device is a device, in the valid device in the first area, whose communication latency between the second device and the first device is less than or equal to a preset latency. Alternatively, the at least one second device is a device at a first preset location in a first sequence, and the first sequence is a sequence obtained by arranging the valid device in the first area in ascending order or descending order of communication latencies between the valid device and the first device. A shorter communication latency between the collaborative computing device of the first device and the first device indicates a shorter forwarding latency of the task executed by the collaborative computing device and the execution result of the task. Therefore, in this possible implementation, the forwarding latency can be further reduced.

Alternatively, the at least one second device is a device, in the valid device in the first area, whose stay duration in the first area is greater than or equal to preset duration. Alternatively, the at least one second device is a device at a second preset location in a second sequence, and the second sequence is a sequence obtained by arranging the valid device in the first area in ascending order or descending order of stay duration in the first area. Because longer stay duration of the collaborative computing device of the first device in the first area may indicate a more reliable collaborative computing device, the possible implementation can improve reliability of collaboratively executing the task.

In another possible implementation, the method may further include: updating the valid device in the first area based on at least one of location information of the first device, whether the first device is connected to a device in the first area, and whether the device connected to the first device in the first area is a collaborative computing device. It can be learned that the valid device in the first area may be updated.

In another possible implementation, the method may further include: obtaining, by the first device, idle computing resource information of the second device. For example, idle computing resource information of the second device that is sent (for example, broadcast) by the second device is received. In this case, the sending, by the first device, a task in the to-be-executed AI task group to each second device may include: sending, by the first device, the task in the to-be-executed AI task group to the second device based on the idle computing resource information of the second device, where a computing resource required for a task sent to any second device in the at least one second device is less than or equal to an idle computing resource of the any second device. This helps the task sent to the second device to be executed by the second device. This improves efficiency of processing the to-be-executed AI task group.

In another possible implementation, the available computing resource of the first device includes a computing resource used by the first device to execute a task of another device. The method may further include: when the first device determines that the available computing resource of the first device is less than or equal to the computing resource required by the to-be-executed AI task group, stopping executing an AI task group of the another device, where a computing recourse released by stopping executing the AI task group of the another device is used to execute another task other than the sent task in at least one AI task group. It can be learned that this application supports a technical solution of preferentially processing a locally triggered AI task.

Optionally, a real-time requirement of the another task locally executed by the first device is higher than a real-time requirement of the task executed by the second device, or a reliability requirement of the another task locally executed by the first device is higher than a reliability requirement of the task executed by the second device. This helps improve overall processing performance of the to-be-executed AI task group. For related descriptions of the real-time requirement and the reliability requirement of the task, refer to the following specific implementation part.

Optionally, the real-time requirement of the another task locally executed by the first device is higher than the real-time requirement of the task executed by the second device, and the reliability requirement of the another task locally executed by the first device is higher than the reliability requirement of the task executed by the second device.

According to a second aspect, this application provides a task processing apparatus. The apparatus may be configured to perform any method according to the first aspect. The apparatus may be specifically a first device.

In a possible implementation, functional modules of the apparatus may be obtained through division according to the method according to the first aspect. For example, the functional modules may be obtained through division corresponding to functions, or two or more functions may be integrated into one processing module.

In another possible implementation, the apparatus may include a memory and a processor, where the memory is configured to store a computer program, and when the computer program is executed by the processor, any method provided in the first aspect is enabled to be performed.

It should be noted that the memory and the processor described in this application may be integrated into one chip, or may be separately disposed in different chips. A type of the memory and a manner of disposing the memory and the processor are not limited in this application.

This application further provides a computer-readable storage medium, where the computer-readable storage medium stores a computer program, and when the computer program is run on a computer, the computer is enabled to perform any one of the possible methods provided in the first aspect.

This application further provides a computer program product. When the computer program product runs on a computer, any method provided in the first aspect is enabled to be performed.

It may be understood that any task processing apparatus, computer-readable storage medium, computer program product, or the like provided above is configured to perform a corresponding method provided in the foregoing description. Therefore, for a beneficial effect that can be achieved by any task processing apparatus, computer-readable storage medium, computer program product, or the like, refer to a beneficial effect in the corresponding method. Details are not described herein again.

### BRIEF DESCRIPTION OF DRAWINGS

FIG. 1 is a schematic diagram of a task processing method according to an embodiment of the present invention;
FIG. 2 is a schematic diagram of a hardware structure of a communications device according to an embodiment of the present invention;
FIG. 3 is a schematic diagram of a software architecture of an operating system according to an embodiment of the present invention;
FIG. 4 is a schematic diagram of an application scenario of a technical solution according to an embodiment of the present invention;
FIG. 5 is a schematic diagram of a connection method of devices according to an embodiment of the present invention;
FIG. 6 is a schematic diagram of a method for determining a collaborative computing device according to an embodiment of the present invention;
FIG. 7 is a schematic diagram of a method for managing an idle computing resource of a collaborative computing device according to an embodiment of the present invention;
FIG. 8A and FIG. 8B are schematic diagrams of a task processing method according to an embodiment of the present invention; and
FIG. 9 is a schematic structural diagram of a first device according to an embodiment of the present invention.

### DESCRIPTION OF EMBODIMENTS

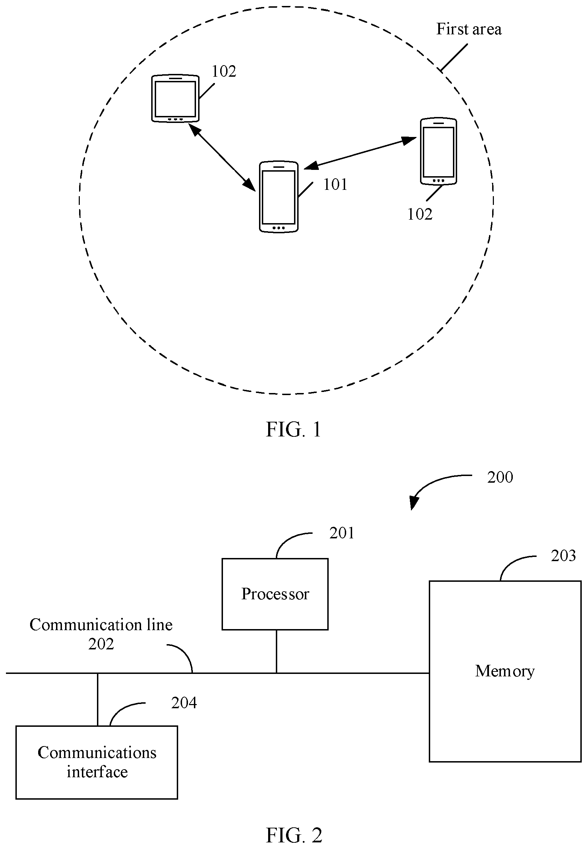

FIG. 1 is a schematic architectural diagram of an application scenario of a technical solution according to an embodiment of the present invention. The application scenario shown in FIG. 1 includes a first device 101 and a valid device 102 in a first area. The first device 101 is a device that initiates a to-be-executed AI task group. The to-be-executed AI task group includes at least one AI task. The AI task is a task that is distributed by an AI application installed on the first device 101 and that needs to be collaboratively executed by using hardware that has an AI computing capability and AI computing software. The AI application may include, for example, but is not limited to, a face recognition application, a translation application, a self-driving application, a speech recognition application, or the like. The first area is an area that uses the first device 101 as a center and a valid communication distance of the first device 101 as a radius. The valid communication distance of the first device 101 is a maximum distance between a device sending a signal and the first device 101 when strength of the signal received by the first device 101 is greater than or equal to preset strength. The valid device 102 in the first area is a collaborative computing device that is in the first area and that is connected to the first device 101. The "connection" herein may be connecting by using a connection technology, especially a short-distance connection technology, such as a Wi-Fi technology, a Bluetooth technology, a local area network, LAN, technology, or an infrared technology. The collaborative computing device is a device on which a collaborative computing function is enabled. In addition, the first device 101 is also a device on which a collaborative computing function is enabled.

If a device that has a communication function and a collaborative computing function initiates the to-be-executed AI task group, the device may be used as the first device 101. The communication function refers to a function of performing communication based on the connection technology, especially the short-distance connection technology, for example, a Wi-Fi communication function, a Bluetooth communication function, a LAN communication function, or an infrared communication function. All devices that have the foregoing communication function and collaborative computing function in the first area may be used as the valid device 102 in the first area. For example, both the first device 101 and the valid device 102 in the first area may include a smartphone, a smart household appliance, a router, a wearable device, a vehicle-mounted device, or the like.

The valid communication distance of the first device 101 may be related to "a connection technology used for connection between the first device 101 and a device around the first device 101". For example, if the connection technology is the Wi-Fi technology, the first area may be specifically a range that uses the first device 101 as a circle center and a communication distance of the Wi-Fi technology as a radius. For example, if the connection technology is the Bluetooth technology, the first area may be specifically a range that uses the first device 101 as a circle center and a communication distance of the Bluetooth technology as a radius. In addition, the valid communication distance of the first device 101 may further be related to a configuration (for example, a communication capability) of the first device 101.

It should be noted that, for ease of description, concepts of "the first area" and "the valid communication distance of the first device 101" are introduced in the embodiments of the present invention. The valid communication distance of the first device 101 is used to represent a size of the first area. It is not difficult to understand that during specific implementation, the first device 101 may not need to first obtain a specific location, the size, and the like of the first area, and then determine which device is the valid device of the first area. Instead, a device connected to the first device 101 in the first area may be first determined, and then which device in the device connected to the first device 101 is the valid device in the first area is determined by determining whether a collaborative computing function of the device connected to the first device 101 is enabled. In other words, the first device 101 may not need to determine a specific value of the valid communication distance of the first device 101. In addition, it may be considered that the device connected to the first device 101 is a device in the first area. Certainly, the device in the first area may further include a device that is not connected to the first device 101.

All devices (including the first device 101 and the valid device 102 in the first area) in FIG. 1 may be implemented by using a communications device 200 in FIG. 2. FIG. 2 is a schematic diagram of a hardware structure of a communications device according to an embodiment of the present invention. The communications device 200 includes at least one processor 201, a communication line 202, a memory 203, and a communications interface 204. The communications interface 204 may include a wired transceiver or a wireless transceiver. The wireless transceiver may include a communications chip. The communications chip may include, for example, but is not limited to, a Wi-Fi chip, a Bluetooth chip, a LAN chip, and an infrared chip. The at least one processor 201 and the communications chip may be integrated together, or may be disposed independently.

The processor 201 may be a central processing unit, CPU, a graphics processing unit , GPU, a neural network processor unit, NPU, a microprocessor, an application-specific integrated circuit, ASIC, or one or more integrated circuits configured to control program execution in the solutions of this application.

The communication line 202 may include a channel, and the channel is configured to transmit information between the foregoing components (for example, the processor 201, the memory 203, and the communications interface 204). The memory 203 may be a read-only memory, ROM, or another type of static storage device that can store static information and instructions, or random access memory, RAM, or another type of dynamic storage device that can store information and instructions, or may be an electrically erasable programmable read-only memory, EEPROM, a compact disc read-only memory, CD-ROM, or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, the memory 203 is not limited thereto. The memory 203 may exist independently, and be connected to the processor 201 by using the communication line 202. The memory 203 may alternatively be integrated with the processor 202. The memory 203 provided in this embodiment of the present invention may usually have non-volatility. The memory 203 is configured to store a computer-executable instruction for executing the solutions of this application, and the processor 201 controls the execution. The processor 201 is configured to execute the computer-executable instruction stored in the memory 203, to implement the method provided in the following embodiments of this application.

The communications interface 204 is configured to communicate with another device by using any apparatus such as a transceiver. For example, if the communications device 200 is the first device 101, the another device herein may be the valid device 102 in the first area. If the communications device 200 is the valid device 102 in the first area, the another device herein is the first device 101.

Optionally, the computer-executable instruction in this embodiment of the present invention may also be referred to as application program code.

In an example, the processor 201 may include one or more CPUs (GPU, NPU, or the like). In an example, the communications device 200 may include a plurality of processors. Each of the processors may be a single-core (single-CPU) processor or a multi-core (multi-CPU) processor. The processor herein may be one or more devices, circuits, and/or processing cores for processing data (for example, computer program instructions).

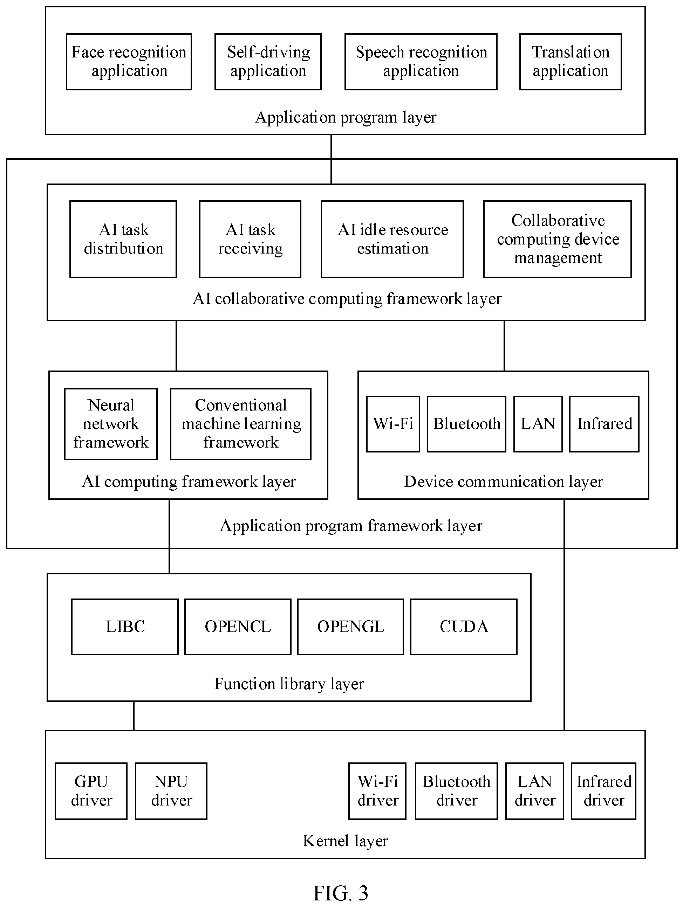

The communications device 200 may be a general-purpose device or a dedicated device. In specific implementation, the communications device 200 may be a desktop computer, a portable computer, a network server, or a personal digital assistant, PDA, a tablet computer, a smartphone, a smart household appliance, a router, a wearable device, a vehicle-mounted device, a wireless terminal device, an embedded device, or a device that has a structure similar to that in FIG. 2. A type of the communications device 200 is not limited in this embodiment of the prevent invention. For example, the memory 203 may store an operating system. The operating system may implement based on the hardware architecture shown in FIG. 2, a function corresponding to the task processing method provided in this embodiment of the present invention. The following describes a software architecture of the stored operating system. It should be noted that, in this embodiment of the present invention, the operating system shown in FIG. 3 is used as an example to describe a software environment required by the communications device 200 to implement the task processing method provided in this embodiment. Certainly, the task processing method provided in this embodiment of the present invention may also be implemented by using another operating system.

FIG. 3 is a schematic diagram of a software architecture of an operating system that can run in the communications device 200. The software architecture may include an application (Applications) program layer, an application framework (Application Framework) layer, a function library (Libraries) layer, and a kernel (Kernel) layer. Details are as follows:
The application program layer is an uppermost layer of the operating system. In this embodiment of the present invention, the application program layer may include an AI application, for example, a face recognition application, a self-driving application, a speech recognition application, or a translation application.

The application program framework layer mainly provides various application programming interfaces, API, that can be used to access an application program for a developer. The developer may interact with a bottom layer (for example, the function library layer or the kernel layer) of the operating system by using the application program framework, to develop an application program of the developer. The application program framework layer mainly includes a series of service modules and management modules of the operating system. In this embodiment of the present invention, the application program framework layer may specifically include an AI collaborative computing framework layer, an AI computing framework layer, and a device communication layer. The AI collaborative computing framework layer is used to implement AI task distribution, AI task receiving, AI idle resource estimation, collaborative computing device management, and the like by interacting with the AI computing framework layer and/or the device communication layer, and the bottom layer of the operating system. The AI computing framework layer is used to implement AI computing by interacting with the device communication layer and the bottom layer of the operating system. For example, the AI computing framework layer may include but is not limited to a neural network framework (such as Caffe and TensorFlow) and a conventional machine learning framework. The device communication layer is used to communicate with another device by interacting with the bottom layer of the operating system, for example, communicating by using a Wi-Fi technology, a Bluetooth technology, a LAN technology, or an infrared technology. The function library layer is a support of the application framework, and is an important link that connects the application framework layer and the kernel layer. The function library can be used by different components in the operating system. The function library provides services for the developer by using the application framework layer. Specifically, the function library may include an LIBC function library, an open computing language, OPENCL, function library, an open graphics library, OPENGL, function library, a unified computing device architecture, CUDA, function library, and the like.

The kernel layer is used to provide core system services of the operating system, such as security, memory management, and process management. In addition, a network protocol stack and a driver model are also based on the kernel layer. There are many driver programs related to a mobile device at the kernel layer, for example, a GPU driver, an NPU driver, a Wi-Fi driver, a Bluetooth driver, a LAN driver, and an infrared driver.

All the following technical solutions may be implemented in a communications device that has the hardware architecture (as shown in FIG. 2) and the software architecture (as shown in FIG. 3).

It may be understood that, because the valid device 102 in the first area is a collaborative computing device that is in the first area and that is connected to the first device 101, if a location of the first device 101 changes, the first area is accordingly updated. In this way, the valid device 102 in the first area may be accordingly updated. In addition, whether the first device 101 is connected to a device in the first area, and whether the device that is in the first area and that is connected to the first device 101 is a collaborative computing device may all enable the valid device 102 in the first area to be updated.

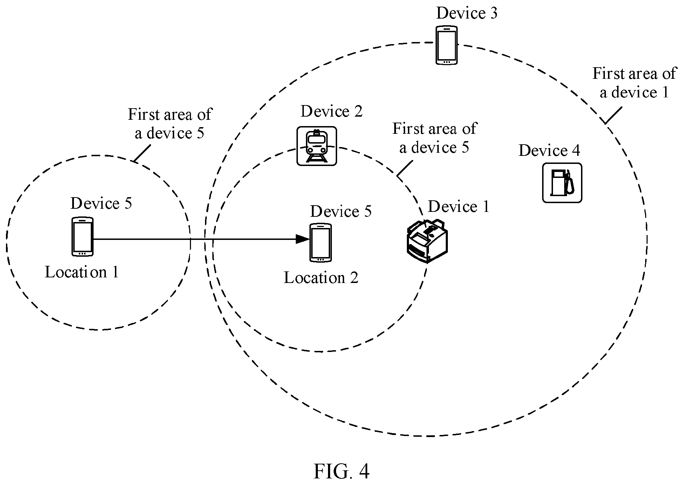

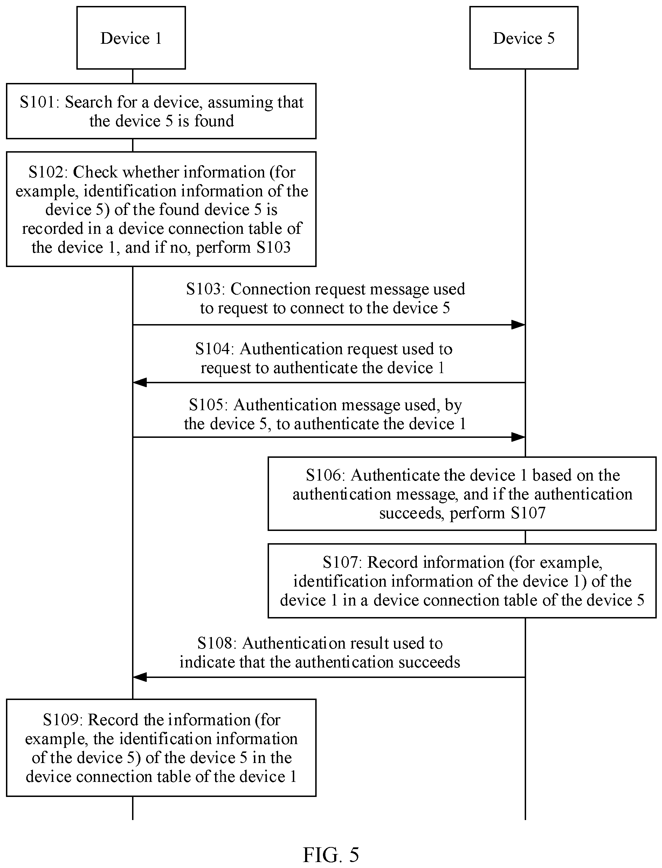

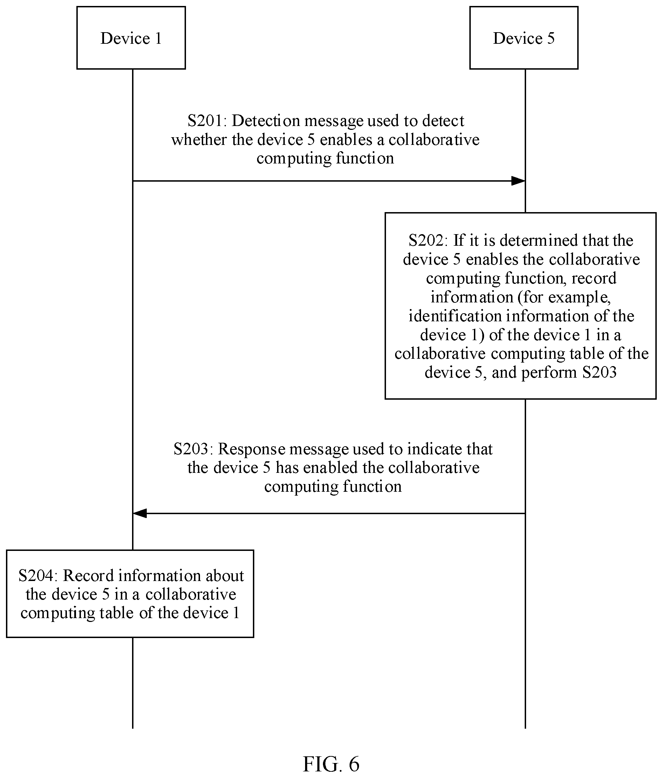

The following describes, by using a specific example, update of the valid device in the first area because of update of the first area (for example, referring to FIG. 4), a method for determining, by the first device 101, whether the first device 101 is connected to the device in the first area (for example, referring to FIG. 5), and a method for determining whether the device connected to the first device 101 in the first area is the collaborative computing device (for example, referring to FIG. 6).

FIG. 4 is a schematic diagram of an application scenario of a technical solution according to an embodiment of the present invention. FIG. 4 shows devices 1 to 5. If the devices 1 to 5 each have a communication function and a collaborative computing function, any one of the devices 1 to 5 may be used as the first device 101. A dashed-line area that uses the device 1 as a center represents a first area of the device 1, and a dashed-line area that uses the device 5 as a center represents a first area of the device 5. When the device 5 is at a location 1, there is no device in the first area of the device 5. Therefore, there is no valid device in the first area of the device 5. In this case, devices in the first area of the device 1 include the device 2 to the device 4. Therefore, any one of the devices 2 to 4 may be used as a valid device in the first area of the device 1. When the device 5 moves to a location 2, the first area of the device 5 is accordingly updated. In this case, the device 1 and the device 2 are included in the first area of the device 5. Therefore, either of the device 1 and the device 2 may be used as a valid device in the first area of the device 5. In this case, devices in the first area of the device 1 include devices 2 to 5. Therefore, any one of the devices 2 to 5 may be used as a valid device in the first area of the device 1. It can be learned that the valid device in the first area may be updated with the update of the first area.

FIG. 5 is a schematic diagram of a connection method of devices according to an embodiment of the present invention. The embodiment shown in FIG. 5 is described based on FIG. 4 as an example. The method shown in FIG. 5 may include the following steps.

S101: The device 1 searches for a device. For example, the device 1 sends (for example, periodically sends) a signal by using a connection technology (for example, a Wi-Fi technology or a Bluetooth technology). If a signal returned by another surrounding device is received, it indicates that the another device is in the first area and a connection function is enabled. It is considered that the another device is found. The device 1 is a device on which a connection function is enabled. Based on the example shown in FIG. 4, if the device 5 is at the location 1, after S101 is performed, the device 1 may find the devices 2 to 4. If the device 5 is at the location 2, after S101 is performed, the device 1 may find the devices 2 to 5. For example, the device 1 finds the device 5, and the device 1 may continue to perform the following S102.

S102: The device 1 checks whether information (for example, identification information of the device 5) of the found device 5 is recorded in a device connection table of the device 1. The device connection table of the device 1 is a table maintained (including created and/or updated) by the device 1 for managing a device connected to the device 1, and the device connection table of the device 1 is used to record identification information of the device connected to the device 1, and the like. Certainly, the device connected to the device 1 may be managed in another manner. This is not limited in this application.

If the information of the device 5 is recorded in the device connection table of the device 1, it indicates that the device 1 is connected to the device 5, and the process ends.

If the information of the device 5 is not recorded in the device connection table of the device 1, it indicates that the device 1 is not connected to the device 5. The device 1 may be connected to the device 5 by performing the following S103 to S109.

S103: The device 1 sends a connection request message to the device 5. The connection request message is used to request to connect to the device 5.

S104: After receiving the connection request message, the device 5 sends an authentication request to the device 1. The authentication request is used to request to authenticate the device 1.

S105: After receiving the authentication request, the device 1 sends an authentication message to the device 5. The authentication message is used by the device 5 to authenticate the device 1. For example, if the connection technology in S101 is the Wi-Fi technology, the authentication message may include a Wi-Fi password and the like. If the connection technology in S101 is the Bluetooth technology, the authentication message may include a Bluetooth pairing code and the like.

S106: After receiving the authentication message, the device 5 authenticates the device 1 based on the authentication message. If the authentication succeeds, S107 is performed.

S107: The device 5 records information (for example, identification information of the device 1) of the device 1 is recorded in a device connection table of the device 5. The device connection table of the device 5 is a table maintained by the device 5 for managing a device connected to the device 5.

S108: The device 5 sends an authentication result to the device 1, and the authentication result is used to indicate that the authentication succeeds.

An execution sequence of S107 and S108 is not limited in this embodiment of the present invention. For example, S107 may be performed before S108, or S108 may be performed before S107, or S107 and S108 may be simultaneously performed.

S109: After receiving the authentication result, the device 1 records the information (for example, the identification information of the device 5) of the device 5 in the device connection table of the device 1.

In this way, the device 1 is connected to the device 5, and subsequently the device 1 may communicate with the device 5.

It should be noted that, in S106, if the authentication performed by the device 5 on the device 1 based on the authentication message fails, the device 5 sends, to the device 1, an authentication result used to indicate that the authentication fails. In this case, it indicates that device 1 fails to be connected to the device 5. Subsequently, the device 1 cannot communicate with the device 5.

The embodiment shown in FIG. 5 is merely used as a specific example of an inter-device connection method applicable to the embodiments of the present invention, and does not constitute a limitation on the inter-device connection method in the embodiments of the present invention.

The embodiment shown in FIG. 5 may be considered as an implementation in which the device 1 and the device 5 add information in their own device connection tables. A method for deleting the information in the device connection table of the device may include either of the following manner 1 or manner 2:
Manner 1: If the device 1 does not receive, within a preset time period, a signal sent by the device 5, it indicates that the device 5 may disable a connection function, or the device 5 leaves the first area of the device 1 due to location update of the device 1 or the device 5. The device 1 deletes the information of the device 5 that is recorded in the device connection table of the device 1.
Manner 2: If the device 1 disables the connection function, the device 1 may delete information of each device recorded in the device connection table of the device 1.

Similarly, another device (for example, the device 5) may delete information in the device connection table of the another device (for example, the device 5) in a similar manner.

FIG. 6 is a schematic diagram of a method for determining a collaborative computing device according to an embodiment of the present invention. The embodiment shown in FIG. 6 is described based on FIG. 4 as an example. The method shown in FIG. 6 may include the following steps.

S201: The device 1 sends a detection message to some or all devices in a device connection table of the device 1 by using a connection technology. The device 1 is a device on which a collaborative computing function is enabled. The detection message is used to detect whether a device that receives the detection message enables a collaborative computing function. It is assumed that the device connection table of the device 1 includes information of the device 5, and then S202 is performed.

S202: After receiving the detection message, if it is determined that the device 5 enables the collaborative computing function, the device 5 records information (for example, identification information of the device 1) of the device 1 in a collaborative computing table of the device 5, and the following S203 is performed.

The collaborative computing table of the device 5 is a table maintained (including created and/or updated) by the device 5 to manage information of the collaborative computing device of the device 5. The collaborative computing table of the device 5 may include identification information of the collaborative computing device of the device 5, information of an idle computing resource of each collaborative computing device, and the like. For related descriptions of the information of the idle computing resource of the collaborative computing device, refer to the following. Certainly, the device 5 may alternatively manage the information of the collaborative computing device of the device 5 in another implementation. This is not limited in this application.

S203: The device 5 sends a response message to the device 1. The response message is used to indicate that the device 5 enables the collaborative computing function.

S204: After receiving the response message, the device 1 records the information of the device 5 in a collaborative computing table of the device 1. The collaborative computing table of the device 1 is a table maintained (including created and/or updated) by the device 1 to manage information of the collaborative computing device of the device 1. In this case, the device 1 uses the device 5 as the collaborative computing device of the device 1, and the device 5 uses the device 1 as the collaborative computing device of the device 5. Subsequently, the device 1 and the device 5 may collaboratively execute an AI task triggered by the device 1 or the device 5.

It should be noted that, in S202, after receiving the detection message, if it is determined that the device 5 does not enable the collaborative computing function, the device 5 may send, to the device 1, a response message used to indicate that the collaborative computing function is not enabled. In this case, it should be noted that the device 5 cannot be used as the collaborative computing device of the device 1.

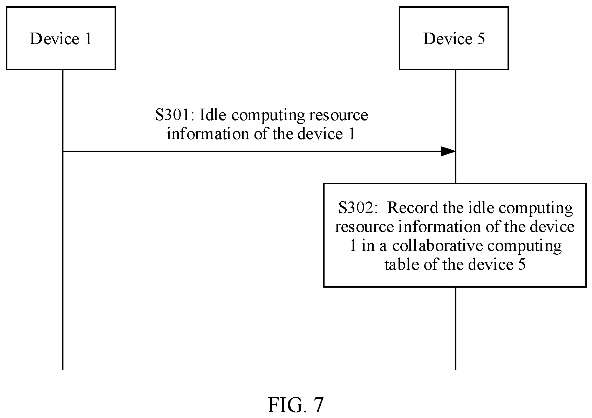

In addition, it should be noted that, to implement collaborative execution of the AI task, the information of the idle computing resource of the collaborative computing device may be recorded by using the method shown in FIG. 7. The method shown in FIG. 7 may include the following steps.

S301: The device 1 sends (for example, broadcasts such as periodically broadcasts) idle computing resource information of the device 1 to each collaborative computing device of the device 1. It may be understood that the collaborative computing device of the device 1 is a device corresponding to information recorded in a collaborative computing table of the device 1. It is assumed that the collaborative computing table of the device 1 includes identification information of the device 5, and then S302 may be performed.

The idle computing resource information of the device 1 is used to indicate an idle computing resource of the device 1. The device 1 may estimate the idle computing resource of the device 1 in any one of the following manner A to manner C:
Manner A: The device 1 estimates the idle computing resource of the device 1 based on a computing resource required by a to-be-executed AI task.

The to-be-executed AI task is an AI task that is triggered by the device 1 and that is not completely executed. When there is a to-be-executed AI task that needs to be executed in the device 1, the device 1 broadcasts the idle computing resource information of the device 1. The idle computing resource indicated by broadcasting the idle computing resource information of the device 1 may be a difference obtained by subtracting the computing resource required by the to-be-executed AI task from the idle computing resource of the device 1 at a current moment.

Manner B: The device 1 estimates the idle computing resource of the device 1 based on historical information, and the historical information is a computing resource required by an AI task executed by the device 1 before the current moment.

The manner B may be applicable to a scenario in which the AI task executed by the device 1 has a specific rule in time domain. For example, if the device 1 is a monitoring device, and the monitoring device needs to perform monitoring (that is, execute some AI tasks) in a specific time period of each day, when a current moment of broadcasting the idle computing resource information of the device 1 is before the specific time period, and a next moment of broadcasting the idle computing resource information of the device 1 is within the specific time period, the idle computing resource indicated by broadcasting the idle computing resource of the device 1 may be a difference obtained by subtracting a computing resource that is required in the specific time period and that is determined based on the historical information record from the idle computing resource of the device 1 at the current moment. In this manner, the first device reserves a computing resource for the AI task that is executed in the specific time period. In this way, a probability that the computing resource required by the AI task to be executed in the specific preset time period is insufficient can be reduced, thereby improving performance. Certainly, a specific application scenario is not limited thereto.

Manner C: The device 1 estimates a first idle computing resource of the device 1 based on a computing resource required by a to-be-executed AI task, estimates a second idle computing resource of the device 1 based on historical information, where the historical information is a computing resource required by a task executed by the device 1 before a current moment, and uses a minimum value of the first idle computing resource and the second idle computing resource as the idle computing resource of the device 1. The manner C is a combination of the manner A and the manner B. For related explanations of the manner C, refer to the foregoing descriptions.

S302: After receiving the idle computing resource information of the device 1, the device 5 records the idle computing resource information of the device 1 in a collaborative computing table of the device 5.

The embodiment shown in FIG. 6 is merely used as a specific example of a method for determining a collaborative computing device applicable to the embodiments of the present invention, and does not constitute a limitation on a manner of determining the collaborative computing device in the embodiments of the present invention. The embodiment shown in FIG. 7 is merely used as a method for recording information of an idle computing resource of a collaborative computing device according to an embodiment of the present invention, and does not constitute a limitation on a manner of recording the information of the idle computing resource of the collaborative computing device in this embodiment of the present invention.

The embodiments shown in FIG. 6 and FIG. 7 may be considered as an implementation in which the device 1 and the device 5 add information in their own collaborative computing tables. A method for deleting the information in the collaborative computing table of the device may include any one of the following manner 1 to manner 3:
Manner 1: If the device 1 determines that information of the device 5 (for example, the identification information of the device 5) is deleted from a resource device table of the device 1, it indicates that the device 5 disables a connection function, or the device 5 leaves a first area of the device 1 due to location update of the device 1 or the device 5. The device 1 deletes the information (for example, including the identification information of the device 5 and idle computing resource information of the device 5) of the device 5 that is recorded in the collaborative computing table of the device 1.

Manner 2: If information of the device 5 is recorded in a resource device table of the device 1, but the device 1 cannot receive, within a preset time period, information that is sent by the device 5 and that is related to a collaborative computing function, it indicates that the device 5 may disable a collaborative computing function, and the device 1 deletes the information of the device 5 that is recorded in a device connection table of the device 1. A specific implementation of the information related to the collaborative computing function is not limited in this embodiment of the present invention. For example, information that is sent by a device and that is related to the collaborative computing function may be idle computing resource information of the device, or may be new information. Manner 3: If the device 1 disables a collaborative computing function, the device 1 deletes information of each device that is recorded in the collaborative computing table of the device 1. Further, optionally, the device 1 may further send (for example, broadcast) indication information, where the indication information is used to indicate that the device 1 disables the collaborative computing function. In this case, a device (for example, the device 5) that receives the indication information deletes information of the device 1 in the collaborative computing table of the device 5 based on the indication information.

Similarly, another device (for example, the device 5) may also delete information in a collaborative computing table of the another device (for example, the device 5) in a similar manner.

It should be noted that, to improve task processing efficiency, in some embodiments of this application, a device that has a connection function and a collaborative computing function may update information in the device connection table and the collaborative computing table of the device according to but not limited to the method described above. In this way, when an application in the device distributes the AI task, a task processing method may be directly performed based on the information recorded in the collaborative computing table. Certainly, in a process of performing task processing, the device may also update the information in the device connection table and the collaborative computing table of the device.

In addition, it should be noted that because a name of the table does not constitute a limitation on the table, names of the "device connection table" and the "collaborative computing table" described in this specification may also be other names. In addition, a method for updating the device connection table and the collaborative computing table may be executed (for example, periodically executed) before, during, and after the task processing method provided in this embodiment of the present invention is executed. This helps the first device obtain a latest collaborative computing device, so as to quickly process a to-be-executed task group.

The following describes a task processing method provided in an embodiment of the present invention.

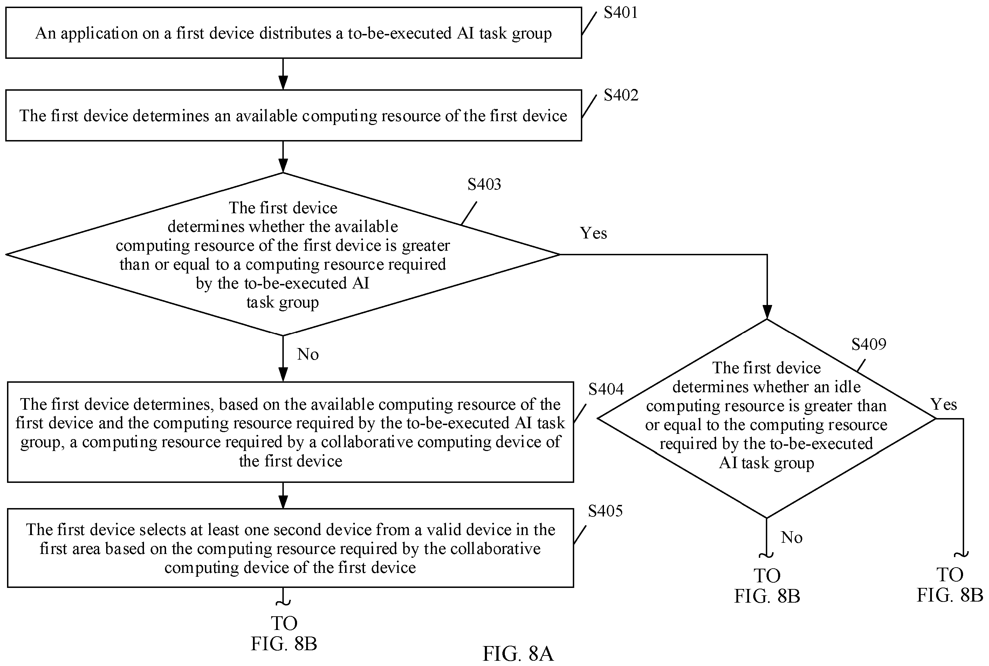

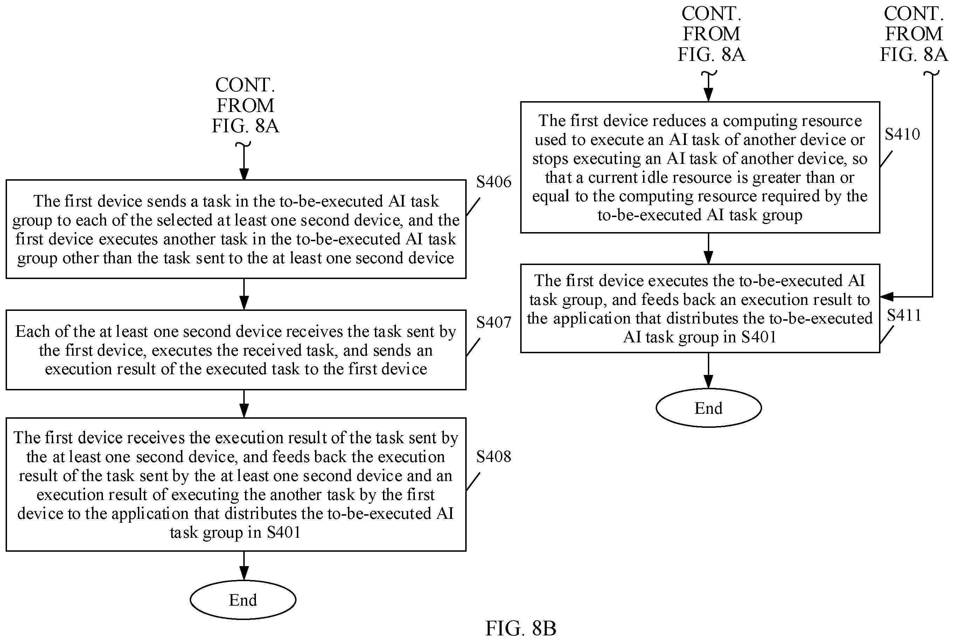

FIG. 8A and FIG. 8B are schematic diagrams of a task processing method according to an embodiment of the present invention. Based on the example shown in FIG. 4, a first device in this embodiment may be any device of the device 1 to the device 5 in FIG. 4. The method shown in FIG. 8A and FIG. 8B may include the following steps.

S401: An application (for example, a face recognition application or a translation application) on a first device distributes a to-be-executed AI task group. The to-be-executed AI task group includes at least one AI task. Specifically, the application in the first device distributes identification information of each AI task in the to-be-executed AI task group, a computing resource required by the to-be-executed AI task group, and the like.

For an application installed on the first device, one AI task or at least two AI tasks may be distributed at one time. In this embodiment of the present invention, the AI task distributed by the application at one time is referred to as an AI task group.

If the AI task group includes at least two AI tasks, the at least two AI tasks may be correlated. The correlation may include a task type correlation. In an example, the task type correlation may include a same task type. For example, a plurality of face recognition tasks may be used as a group of AI tasks. In an example, the task type correlation may include a sequential logical relationship of the task type. For example, because a face detection task usually needs to be executed before a face recognition task is executed, it may be considered that there is a sequential logical relationship between the face detection task and the face recognition task. Therefore, the face detection task and the face recognition task may be used as a group of AI tasks. Other examples are not enumerated one by one.

If the AI task group includes one AI task, the AI task may be divided into at least two subtasks. For example, it is assumed that the AI task is a face recognition task. In a process of executing the face recognition task, processes such as feature detection, feature extraction, and feature matching need to be first performed on a face image. Therefore, the processes of performing feature detection, feature extraction, and feature matching on the face image each may be used as a subtask. For another example, it is assumed that the AI task is a translation task. A plurality of paragraphs need to be translated, and translation of each paragraph may be used as a subtask. Other examples are not enumerated one by one. The step of dividing one AI task into a plurality of subtasks may be executed by an application that distributes the AI task (for example, executed at the application program layer in FIG. 3), or may be executed by a module (for example, executed at the AI collaborative computing framework layer in FIG. 3) that receives the AI task in the first device.

When the to-be-executed AI task group includes at least two AI tasks, the computing resource required by the to-be-executed AI task group may be replaced with a computing resource required by each AI task in the to-be-executed AI task group. When the to-be-executed task group includes one AI task, the computing resource required by the to-be-executed AI task group is a computing resource required by the AI task. In this case, the computing resource required by the to-be-executed AI task group may be replaced with a computing resource required by each of the plurality of subtasks obtained by dividing the AI task. In this case, information distributed by the application may further include identification information of each of the plurality of subtasks.

The computing resource is a quantity of tasks executed in a unit time, and may be used to represent a computing capability of a processor (such as a CPU, a GPU, or an NPU) of the first device. For example, a unit of the computing resource may be a quantity of floating-point operations per second, FLOPS, a bit/s (bits/s), or the like.

S402: The first device determines an available computing resource of the first device.

If the first device does not collaboratively execute an AI task triggered by another device at a current moment, the available computing resource of the first device includes an idle computing resource of the first device. If the first device is collaboratively executing an AI task of another device at a current moment, the available computing resource of the first device includes an idle computing resource of the first device and a computing resource used by the first device to collaboratively execute the AI task triggered by the another device.

S403: The first device determines whether the available computing resource of the first device is greater than or equal to the computing resource required by the to-be-executed AI task group.

If yes, it indicates that the first device can complete a task in the to-be-executed AI task group within a preset time period by using the available computing resource of the first device, and S409 is performed.

If no, it indicates that the first device cannot complete a task in the to-be-executed AI task group within a preset time period by using the available computing resource of the first device. Therefore, the task needs to be collaboratively executed by the another device, and S404 is performed.

S404: The first device determines, based on the available computing resource of the first device and the computing resource required by the to-be-executed AI task group, a computing resource required by a collaborative computing device of the first device (that is, a computing resource required by a collaborative computing device of the first device to collaboratively execute the to-be-executed AI task group).

For example, if the computing resource required by the to-be-executed AI task group is A bit/s, and the available computing resource of the first device is B bit/s, the computing resource required by the collaborative computing device of the first device is (A - B) bit/s.

S405: The first device selects at least one second device from a valid device in the first area based on the computing resource required by the collaborative computing device of the first device. A sum of idle computing resources of the at least one second device is greater than or equal to the computing resource required by the collaborative computing resource group of the first device. For example, with reference to the foregoing description, the valid device in the first area and the idle computing resource of the at least one second device may be obtained from a collaborative computing table maintained by the first device.

For example, with reference to FIG. 3, S402 to S405 may be considered as being executed at the AI collaborative computing framework layer of the first device.

S404 and S405 are specific implementations in which the first device selects the at least one second device from the valid device in the first area.

S406: The first device sends the task in the to-be-executed AI task group to each of the selected at least one second device, and the first device executes another task in the to-be-executed AI task group other than the task sent to the at least one second device. A sum of computing resources required by the task sent by the first device to each second device is less than or equal to an idle computing resource of the second device.

For example, with reference to FIG. 3, the sending step in S406 may be considered as AI task distribution being executed at the AI collaborative computing framework layer of the first device, and the execution step may be considered as being executed at an AI computing framework layer of the first device.

Specifically, if the to-be-executed AI task group includes at least two AI tasks, the sent task is some of the at least two AI tasks. If the to-be-executed AI task group includes one AI task, the sent task is some subtasks of the one AI task.

When the to-be-executed AI task group includes one AI task (referred to as a to-be-executed AI task below), and in S401, before the application in the first device distributes the to-be-executed AI task, the to-be-executed AI task is not divided into a plurality of subtasks. Before S406 is performed, the method may further include: dividing, by the first device, the to-be-executed AI task into a plurality of subtasks.

Optionally, if the first device is collaboratively executing the AI task of the another device at the current moment, before the executing, by the first device, another task in the to-be-executed AI task other than the task sent to the at least one second device, the method may further include: stopping executing the AI task of the another device. Subsequently, after completing an AI task triggered by the first device, the first device may continue to execute the stopped AI task of the another device. In other words, this embodiment of the present invention supports a technical solution in which the first device preferentially ensures processing of the AI task triggered by the first device.

Optionally, a real-time requirement of the another task locally executed by the first device is higher than a real-time requirement of a task executed by the second device. A specific implementation of how the first device determines a real-time requirement between different tasks is not limited in this embodiment of the present invention. For example, for a translation task or a speech recognition task, compared with a task that is earlier in time, a task that is later in time has a relatively low real-time requirement. A task that has a relatively high real-time requirement is processed locally, so that a forwarding latency of the task and a forwarding latency of an execution result of the task can be reduced. This helps improve overall processing performance of the to-be-executed AI task group.

Optionally, a reliability requirement of the another task locally executed by the first device is higher than a reliability requirement of a task executed by the second device. A specific implementation of how the first device determines a reliability requirement level between different tasks is not limited in this embodiment of the present invention. For example, for a face recognition task, when a plurality of face images in one image need to be recognized, it may be considered that reliability of a task of recognizing an image farther away from a center of the image is lower. This helps improve overall processing performance of the to-be-executed AI task group.

Optionally, the real-time requirement of the another task locally executed by the first device is higher than the real-time requirement of the task executed by the second device, and the reliability requirement of the another task locally executed by the first device is higher than the reliability requirement of the task executed by the second device. S407: Each of the at least one second device receives the task sent by the first device, executes the received task, and sends an execution result of the executed task to the first device.

For example, with reference to FIG. 3, the receiving step in S407 may be considered as AI task receiving being executed at an AI collaborative computing framework layer of the second device, the execution step may be considered as being executing at an AI computing framework layer of the second device, and the sending step may be considered as executing at a device communication layer of the second device.

S408: The first device receives an execution result of a task sent by the at least one second device, and feeds back the execution result of the task sent by the at least one second device and an execution result of executing the another task by the first device to the application that distributes the to-be-executed AI task group in S401. After S408 is performed, the process ends.

Specifically, if the to-be-executed task AI task group includes at least two AI tasks, the first device directly feeds back, to the application that distributes the to-be-executed AI in S401, a received execution result that is of some of the at least two AI tasks and that is sent by the at least one second device, and feeds back an execution result of the other of the at least two AI tasks executed by the first device to the application that distributes the to-be-executed AI in S401. If the to-be-executed task AI task group includes one AI task (referred to as a to-be-executed AI task below), the first device combines a received execution result that is of some subtasks of the to-be-executed AI task and that is sent by the at least one second device with an execution result of the other of the to-be-executed AI task executed by the first device, and feeds back an execution result obtained after combination to the application that distributes the to-be-executed AI in S401. For example, the first device may combine, according to a sequence of subtasks of the to-be-executed AI task, an execution result that is of a subtask and that is fed back by the at least one second device with an execution result of a subtask that is locally executed. For example, it is assumed that subtasks of the to-be-executed AI task are subtasks 1 to 5. The subtask 1 and the subtask 3 are locally executed, the subtask 2 is executed on one second device, and the subtasks 4 and 5 are executed on another second device. The first device may combine an execution result of the subtask 1 and an execution result of the subtask 3, and an execution result of the subtasks 3 to 5 that is fed back by the at least one second device into an execution result of the subtasks 1 to 5.

For example, with reference to FIG. 3, the receiving step in S408 may be considered as being executed at the device communication layer of the first device, and the feedback step may be considered as being executed at the AI collaborative computing framework layer of the first device.

S409: The first device determines whether the idle computing resource of the first device is greater than or equal to the computing resource required by the to-be-executed AI task group.

If yes, it indicates that the first device can complete execution of the to-be-executed AI task group within a preset time period by using the current idle computing resource, and S411 is performed. If no, it indicates that the first device cannot complete execution of the to-be-executed AI task group within a preset time period by using the current idle computing resource. In this case, the first device is collaboratively executing the AI task of the another device at the current moment, and S410 is performed.

S410. The first device reduces a computing resource used to execute the AI task of the another device or stops executing the AI task of the another device, so that a current idle resource is greater than or equal to the computing resource required by the to-be-executed AI task group. In this way, it can be ensured that the first device preferentially processes the AI task triggered by the first device.

For example, with reference to FIG. 3, S409 and S410 may be considered as being executed at the AI collaborative computing framework layer of the first device.

S411: The first device executes the to-be-executed AI task group, and feeds back an execution result to the application that distributes the to-be-executed AI task group in S401. After S411 is performed, the process ends.

For example, with reference to FIG. 3, the execution step in S411 may be considered as being executed at the AI computing framework layer of the first device, and the feedback step may be considered as being executed at the AI collaborative computing framework layer of the first device.

In the task processing method provided in this embodiment of the present invention, some tasks in the to-be-executed AI task group are locally executed by the first device, and the other tasks are executed by the at least one second device. In other words, the first device and the at least one second device collaboratively execute the AI task group. Because the second device is in the area that uses the first device as the circle center and the valid communication distance of the first device as the radius, compared with a technical solution in the prior art in which the first device and the device/cloud collaboratively execute the AI task (or the AI task group), in this method, a distance from the first device to the second device of the task executed by the second device and a distance from the second device to the first device of an execution result of the task are relatively short. Therefore, a forwarding latency is relatively short. A specific feature of the at least one second device selected by the first device in S405 is not limited in this embodiment of the present invention. Theoretically, any device in the valid device in the first area may be used as the second device. The following lists several optional implementations provided in this embodiment of the present invention.

Manner 1: The at least one second device is a device, in the valid device in the first area, whose communication latency between the device and the first device is less than or equal to a preset latency.

The first device may directly or indirectly determine a value relationship between the preset latency and a communication latency between each of the valid device in the first area and the first device, to determine whether any valid device in the first area can be used as the second device. For example, the communication latency between each of the valid device in the first area and the first device is first obtained, and the communication latency is compared with the preset latency, to determine whether the device can be used as the second device. For example, a value of the communication latency between each of the valid device in the first area and the first device may be determined, for example, but is not limited to, by using a distance between each of the valid device in the first area and the first device. Generally, a communication latency between a device closer to the first device and the first device is shorter. Therefore, the first device may determine whether the device can be used as the second device by determining the distance between each of the valid device in the first area and the first device and determining whether the distance is less than or equal to a preset distance. It should be noted that, in this embodiment of the present invention, how the first device determines the distance between the valid device in the first area and the first device is not limited. For example, the first device may determine the distance between the first device and the valid device in the first area in a process of connecting the first device to the valid device in the first area.

A specific value and a determining manner of the preset latency are not limited in this embodiment of the present invention. For example, the specific value and the determining manner of the preset latency may be determined based on a factor such as the real-time requirement of the task executed by the collaborative computing device of the first device in the to-be-executed AI task group.

Manner 2: The at least one second device is a device at a first preset location in a first sequence, and the first sequence is a sequence obtained by arranging the valid device in the first area in ascending order or descending order of communication latencies between the valid device and the first device.

Specifically, if the first sequence is a sequence obtained by arranging the valid device in the first area in ascending order of communication latencies between the valid device and the first device, the at least one second device is the first one or more devices in the first sequence. If the first sequence is a sequence obtained by arranging the valid device in the first area in descending order of communication latencies between the valid device and the first device, the at least one second device is the last one or more devices in the first sequence.

For example, the first sequence is the sequence obtained by arranging the valid device in the first area in ascending order of the communication latencies between the valid device and the first device, the first device may select the at least one second device from the valid device in the first area according to the following method. The first device first determines whether an idle computing resource of a first device in the first sequence is greater than or equal to the computing resource required by the collaborative computing device of the first device. If yes, the first device in the first sequence is used as the at least one second device. If no, whether a sum of idle computing resources of first two devices in the first sequence is greater than or equal to the computing resource required by the collaborative computing device of the first device is determined. If yes, the first two devices in the first sequence are used as the at least one second device. If no, whether a sum of idle computing resources of first three devices in the first sequence is greater than or equal to the computing resource required by the collaborative computing device of the first device is determined, and so on, until the at least one second device is determined.

It should be noted that a shorter communication latency between the collaborative computing device of the first device and the first device indicates a shorter forwarding latency of the task executed by the collaborative computing device and the execution result of the task. Therefore, in the manner 1 and the manner 2, the forwarding latency can be further reduced.

Manner 3: The at least one second device is a device, in the valid device in the first area, whose stay duration in the first area is greater than or equal to preset duration.

In this manner, the first device may maintain (including create and/or update) the stay duration, in the first area, of the valid device in the first area, to compare a value relationship between the stay duration and the preset duration. For example, after determining that the first device is connected to the valid device in the first area, the first device may start a timer, to start to record the stay duration of the valid device in the first device. Certainly, this application is not limited thereto.

A specific value and a determining manner of the preset latency are not limited in this embodiment of the present invention. For example, the specific value and the determining manner of the preset latency may be determined based on a factor such as the reliability requirement of the task executed by the collaborative computing device of the first device in the to-be-executed AI task group.

Manner 4: The at least one second device is a device at a second preset location in a second sequence, and the second sequence is a sequence obtained by arranging the valid device in the first area in ascending order or descending order of stay duration in the first area. A second device with longer stay duration in the first area is more reliable, and is more suitable to be used as the collaborative computing device of the first device.

In this manner, the first device may maintain (including create and/or update) the stay duration, in the first area, of the valid device in the first area. Certainly, this application is not limited thereto.

Specifically, if the second sequence is a sequence obtained by arranging the valid device in the first area in descending order of the stay duration in the first area, the at least one second device is the first one or more devices in the first sequence. If the second sequence is a sequence obtained by arranging the valid device in the first area in ascending order of the stay duration in the first area, at least one second device is the last one or more devices in the first sequence. For example, the second sequence is the sequence obtained by arranging the valid device in the first area in descending order of the stay duration in the first area, the first device may select the at least one second device from the valid device in the first area according to the following method. The first device first determines whether an idle computing resource of a first device in the second sequence is greater than or equal to the computing resource required by the collaborative computing device of the first device. If yes, the first device in the second sequence is used as the at least one second device. If no, whether a sum of idle computing resources of first two devices in the second sequence is greater than or equal to the computing resource required by the collaborative computing device of the first device is determined. If yes, the first two devices in the second sequence are used as the at least one second device. If no, whether a sum of idle computing resources of first three devices in the second sequence is greater than or equal to the computing resource required by the collaborative computing device of the first device is determined, and so on, until the at least one second device is determined.

It should be noted that longer stay duration of the collaborative computing device of the first device in the first area may indicate a more reliable collaborative computing device. In other words, the collaborative computing device of the first device cannot leave the first area when the execution result of the task has not been fed back, so that a probability that the collaborative computing device cannot continue to be used as the collaborative computing device of the first device is relatively small. Therefore, in the manner 3 and manner 4, reliability of collaboratively executing the task can be improved.

The foregoing mainly describes the solutions provided in the embodiments of the present invention from a perspective of the methods. To implement the foregoing functions, the solutions provided in the embodiments of this application include corresponding hardware structures and/or software modules for performing the functions. A person of ordinary skill in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of the present invention, function modules of the first device may be obtained according to the foregoing method embodiment. For example, the functional modules may be obtained through division corresponding to functions, or two or more functions may be integrated into one processing module. The integrated module may be implemented in a form of hardware, or may be implemented in a form of a software functional module. It should be noted that, in this embodiment of the present invention, module division is exemplary, and is merely a logical function division. In actual implementation, another division manner may be used.

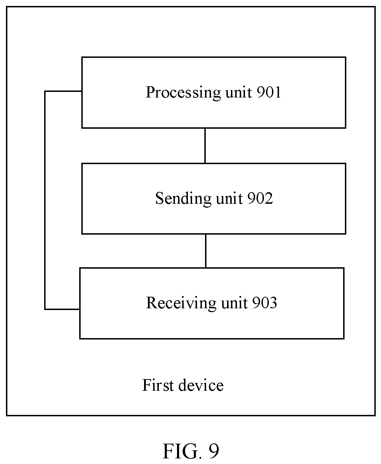

FIG. 9 is a schematic structural diagram of a first device according to an embodiment of the present invention. A first device shown in FIG. 9 may be configured to perform the steps performed by the first device in the method shown in FIG. 8A and FIG. 8B. The task processing apparatus may include a processing unit 901, a sending unit 902, and a receiving unit 903. A processing unit 901 is configured to: when a first device determines that an available computing resource of the first device is less than a computing resource required by a to-be-executed AI task group, select at least one second device from a valid device in a first area, where the first area is an area that uses the first device as a center and a valid communication distance of the first device as a radius, the valid device in the first area is a collaborative computing device that is in the first area and that is connected to the first device, and the AI task group includes at least one AI task. A sending unit 902 is configured to send a task in the to-be-executed AI task group to each of the at least one second device, where if the to-be-executed AI task group includes at least two AI tasks, the sent task is some of the at least two AI tasks, or if the to-be-executed AI task group includes one AI task, the sent task is some subtasks of the AI task. A receiving unit 903 is configured to receive an execution result of the sent task from the second device. For example, with reference to FIG. 8A and FIG. 8B, the processing unit 901 may be configured to perform S405, the sending unit 902 may be configured to perform the sending step in S406, and the receiving unit 903 may be configured to perform the receiving step in S408.

Optionally, the valid communication distance of the first device is a maximum distance between a device sending a signal and the first device when strength of the signal received by the first device is greater than or equal to preset strength.

Optionally, the at least one second device is a device, in the valid device in the first area, whose communication latency between the device and the first device is less than or equal to a preset latency. Alternatively, the at least one second device is a device at a first preset location in a first sequence, and the first sequence is a sequence obtained by arranging the valid device in the first area in ascending order or descending order of communication latencies between the valid device and the first device. Alternatively, the at least one second device is a device, in the valid device in the first area, whose stay duration in the first area is greater than or equal to preset duration. Alternatively, the at least one second device is a device at a second preset location in a second sequence, and the second sequence is a sequence obtained by arranging the valid device in the first area in ascending order or descending order of stay duration in the first area. Optionally, the processing unit 901 is further configured to update the valid device in the first area based on at least one of location information of the first device, whether the first device is connected to a device in the first area, and whether the device connected to the first device in the first area is a collaborative computing device.

Optionally, the processing unit 901 is further configured to obtain idle computing resource information of the second device. The sending unit 902 is specifically configured to send the task in the to-be-executed AI task group to the second device based on the idle computing resource information of the second device, where a computing resource required for a task sent to any second device in the at least one second device is less than or equal to an idle computing resource of the any second device.

Optionally, the available computing resource of the first device includes a computing resource used by the first device to execute a task of another device. The processing unit 901 may be further configured to: when the first device determines that the available computing resource of the first device is less than or equal to the computing resource required by the to-be-executed AI task group, stop executing an AI task group of the another device, where a computing recourse released by stopping executing the AI task group of the another device is used to execute another task other than the sent task in at least one AI task group.

For explanations of related content in this embodiment, descriptions of beneficial effects, and the like, refer to the foregoing method embodiments. Details are not described herein again. In an example, with reference to the communications device shown in FIG. 2, the processing unit 901 may be corresponding to the processor 201 in FIG. 2, and the sending unit 902 and the receiving unit 903 may be corresponding to the communications interface 201 in FIG. 2.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer-executable instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line, DSL) or wireless (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, SSD), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, obviously, various modifications and combinations may be made to them. Correspondingly, the specification and accompanying drawings are merely example description of this application defined by the accompanying claims. Obviously, a person skilled in the art can make various modifications and variations to this application.

## Claims

1. A task processing method, wherein the method comprises:
when a first device determines (S403) that an available computing resource of the first device is less than a computing resource required by a to-be-executed artificial intelligence AI task group, selecting (S405) at least one second device from valid devices in a first area, wherein the first area is an area that uses the first device as a center and a valid communication distance of the first device as a radius, a valid device in the first area is a collaborative computing device that is in the first area and that is connected to the first device, and the AI task group comprises at least one AI task;
sending (S406), by the first device, a task in the to-be-executed AI task group to each of the at least one second device, wherein if the to-be-executed AI task group comprises at least two AI tasks, the sent task is some of the at least two AI tasks, or if the to-be-executed AI task group comprises one AI task, the sent task is some subtasks of the one AI task; and
receiving (S408), by the first device, an execution result of the sent task from the at least one second device,
wherein the valid communication distance of the first device is a maximum distance between a device sending a signal and the first device when strength of the signal received by the first device is greater than or equal to preset strength, **characterized in that**
the at least one second device is a device of the valid devices in the first area, whose communication latency between the device and the first device is less than or equal to a preset latency;
the at least one second device is a device at a first preset location in a first sequence, and the first sequence is a sequence obtained by arranging the valid devices
in the first area in ascending order or descending order of communication latencies between the valid devices and the first device;
the at least one second device is a device of the valid devices in the first area, whose stay duration in the first area is greater than or equal to preset duration; or
the at least one second device is a device at a second preset location in a second sequence, and the second sequence is a sequence obtained by arranging the valid devices in the first area in ascending order or descending order of stay duration in the first area.

2. The task processing method according to claim 1, wherein the method further comprises:
updating the valid device in the first area based on at least one of location information of the first device, whether the first device is connected to a device in the first area, or whether the device connected to the first device in the first area is a collaborative computing device.

3. The task processing method according to claim 1 or 2, wherein the method further comprises:
obtaining, by the first device, idle computing resource information of the second device; and
the sending (S406), by the first device, a task in the to-be-executed AI task group to each of the at least one second device comprises:
sending, by the first device, the task in the to-be-executed AI task group to the second device based on the idle computing resource information of the second device, wherein a computing resource required for a task sent to any second device in the at least one second device is less than or equal to an idle computing resource of the any second device.

4. The task processing method according to any one of claims 1 to 3, wherein the available computing resource of the first device comprises a computing resource used by the first device to execute a task of another device, and the method further comprises:
when the first device determines that the available computing resource of the first device is less than or equal to the computing resource required by the to-be-executed AI task group, stopping executing an AI task group of the another device, wherein a computing recourse released by stopping executing the AI task group of the another device is used to execute another task other than the sent task in at least one AI task group.

5. A first device, wherein the first device comprises:
a processing unit (901), configured to: when the first device determines that an available computing resource of the first device is less than a computing resource required by a to-be-executed artificial intelligence AI task group, select at least one second device from valid devices in a first area, wherein the first area is an area that uses the first device as a center and a valid communication distance of the first device as a radius, a valid device in the first area is a collaborative computing device that is in the first area and that is connected to the first device, and the AI task group comprises at least one AI task;
a sending unit (902), configured to send a task in the to-be-executed AI task group to each of the at least one second device, wherein if the to-be-executed AI task group comprises at least two AI tasks, the sent task is some of the at least two AI tasks, or if the to-be-executed AI task group comprises one AI task, the sent task is some subtasks of the AI task; and
a receiving unit (903), configured to receive an execution result of the sent task from the at least one second device,
wherein the valid communication distance of the first device is a maximum distance between a device sending a signal and the first device when strength of the signal received by the first device is greater than or equal to preset strength, **characterized in that**
the at least one second device is a device, of the valid devices in the first area, whose communication latency between the device and the first device is less than or equal to a preset latency;
the at least one second device is a device at a first preset location in a first sequence, and the first sequence is a sequence obtained by arranging the valid devices in the first area in ascending order or descending order of communication latencies between the valid devices and the first device;
the at least one second device is a device, of the valid devices in the first area, whose stay duration in the first area is greater than or equal to preset duration; or
the at least one second device is a device at a second preset location in a second sequence, and the second sequence is a sequence obtained by arranging the valid devices in the first area in ascending order or descending order of stay duration in the first area.

6. The first device according to claim 5, wherein
the processing unit (901) is further configured to update the valid device in the first area based on at least one of location information of the first device, whether the first device is connected to a device in the first area, and whether the device connected to the first device in the first area is a collaborative computing device.

7. The first device according to claim 5 or 6, wherein
the processing unit (901) is further configured to obtain idle computing resource information of the second device; and
the sending unit (902) is specifically configured to send the task in the to-be-executed AI task group to the second device based on the idle computing resource information of the second device, wherein a computing resource required for a task sent to any second device in the at least one second device is less than or equal to an idle computing resource of the any second device.

8. The first device according to any one of claims 5 to 7, wherein the available computing resource of the first device comprises a computing resource used by the first device to execute a task of another device; and
the processing unit (901) is further configured to: when the first device determines that the available computing resource of the first device is less than or equal to the computing resource required by the to-be-executed AI task group, stop executing an AI task group of the another device, wherein a computing recourse released by stopping executing the AI task group of the another device is used to execute another task other than the sent task in the at least one AI task group.

9. A computer-readable storage medium comprising instructions which, when executed by a computer, cause the computer to carry out the task processing method according to any one of claims 1 to 4,

10. A computer program product comprising instructions which, when executed by a computer, cause the computer to carry out the task processing method according to any one of claims 1 to 4.

## Patentansprüche

1. Verfahren zur Aufgabenverarbeitung, wobei das Verfahren Folgendes umfasst:
wenn eine erste Einrichtung bestimmt (S403), dass eine verfügbare Rechenressource der ersten Einrichtung geringer ist als eine Rechenressource, die von einer auszuführenden künstlichen Intelligenz-Aufgabengruppe, KI-Aufgabengruppe, benötigt wird, Auswählen (S405) von mindestens einer zweiten Einrichtung aus gültigen Einrichtungen in einem ersten Bereich, wobei der erste Bereich ein Bereich ist, der die erste Einrichtung als einen Mittelpunkt und eine gültige Kommunikationsdistanz der ersten Einrichtung als einen Radius verwendet, eine gültige Einrichtung in dem ersten Bereich eine kollaborative Recheneinrichtung ist, die sich in dem ersten Bereich befindet und mit der ersten Einrichtung verbunden ist, und die KI-Aufgabengruppe mindestens eine KI-Aufgabe umfasst;
Senden (S406), durch die erste Einrichtung, einer Aufgabe in der auszuführenden KI-Aufgabengruppe an jede der mindestens einen zweiten Einrichtung, wobei, wenn die auszuführende KI-Aufgabengruppe mindestens zwei KI-Aufgaben umfasst, die gesendete Aufgabe einige der mindestens zwei KI-Aufgaben sind oder, wenn die auszuführende KI-Aufgabengruppe eine KI-Aufgabe umfasst, die gesendete Aufgabe einige Unteraufgaben der einen KI-Aufgabe sind; und
Empfangen (S408), durch die erste Einrichtung, eines Ausführungsergebnisses der gesendeten Aufgabe von der mindestens einen zweiten Einrichtung,
wobei die gültige Kommunikationsdistanz der ersten Einrichtung eine maximale Distanz zwischen einer Einrichtung, die ein Signal sendet, und der ersten Einrichtung ist, wenn eine Stärke des Signals, das von der ersten Einrichtung empfangen wird, größer als oder gleich einer voreingestellten Stärke ist, **dadurch gekennzeichnet, dass**
die mindestens eine zweite Einrichtung eine Einrichtung der gültigen Einrichtungen in dem ersten Bereich ist, dessen Kommunikationslatenz zwischen der Einrichtung und der ersten Einrichtung kleiner als oder gleich einer voreingestellten Latenz ist;
die mindestens eine zweite Einrichtung eine Einrichtung an einem ersten voreingestellten Ort in einer ersten Sequenz ist und die erste Sequenz eine Sequenz ist, die durch Anordnen der gültigen Einrichtungen in dem ersten Bereich in aufsteigender Reihenfolge oder absteigender Reihenfolge der Kommunikationslatenzen zwischen den gültigen Einrichtungen und der ersten Einrichtung erlangt wird;
die mindestens eine zweite Einrichtung eine Einrichtung der gültigen Einrichtungen in dem ersten Bereich ist, deren Aufenthaltsdauer in dem ersten Bereich größer als oder gleich der voreingestellten Dauer ist; oder
die mindestens eine zweite Einrichtung eine Einrichtung an einem zweiten voreingestellten Standort in einer zweiten Sequenz ist und die zweite Sequenz eine Sequenz ist, die durch Anordnen der gültigen Einrichtungen in dem ersten Bereich in aufsteigender Reihenfolge oder absteigender Reihenfolge der Aufenthaltsdauer in dem ersten Bereich erlangt wird.

2. Verfahren zur Aufgabenverarbeitung nach Anspruch 1, wobei das Verfahren ferner Folgendes umfasst:
Aktualisieren der gültigen Einrichtung in dem ersten Bereich basierend auf mindestens einer von Standortinformationen der ersten Einrichtung, ob die erste Einrichtung mit einer Einrichtung in dem ersten Bereich verbunden ist oder ob die Einrichtung, die mit der ersten Einrichtung in dem ersten Bereich verbunden ist, eine kollaborative Recheneinrichtung ist.

3. Verfahren zur Aufgabenverarbeitung nach Anspruch 1 oder 2, wobei das Verfahren ferner Folgendes umfasst:
Erlangen, durch die erste Einrichtung, von Informationen über ungenutzte Rechenressourcen der zweiten Einrichtung; und
das Senden (S406), durch die erste Einrichtung, einer Aufgabe in der auszuführenden KI-Aufgabengruppe an jede der mindestens einen zweiten Einrichtung Folgendes umfasst:
Senden, durch die erste Einrichtung, der Aufgabe in der auszuführenden KI-Aufgabengruppe an die zweite Einrichtung basierend auf den Informationen über ungenutzte Rechenressourcen der zweiten Einrichtung, wobei eine Rechenressource, die für eine an eine beliebige zweite Einrichtung in der mindestens einen zweiten Einrichtung gesendete Aufgabe benötigt wird, kleiner als oder gleich einer ungenutzten Rechenressource der beliebigen zweiten Einrichtung ist.

4. Verfahren zur Aufgabenverarbeitung nach einem der Ansprüche 1 bis 3, wobei die verfügbare Rechenressource der ersten Einrichtung eine Rechenressource, die von der ersten Einrichtung zum Ausführen einer Aufgabe einer anderen Einrichtung verwendet wird, umfasst und das Verfahren ferner Folgendes umfasst:
wenn die erste Einrichtung bestimmt, dass die verfügbare Rechenressource der ersten Einrichtung kleiner als oder gleich der Rechenressource ist, die von der auszuführenden KI-Aufgabengruppe benötigt wird, Stoppen des Ausführens einer KI-Aufgabengruppe der anderen Einrichtung, wobei eine Rechenressource, die durch das Stoppen des Ausführens der KI-Aufgabengruppe der anderen Einrichtung freigegeben wird, verwendet wird, um eine andere Aufgabe als die gesendete Aufgabe in mindestens einer KI-Aufgabengruppe auszuführen.

5. Erste Einrichtung, wobei die erste Einrichtung Folgendes umfasst:
eine Verarbeitungseinheit (901), die zu Folgendem konfiguriert ist: wenn die erste Einrichtung bestimmt, dass eine verfügbare Rechenressource der ersten Einrichtung geringer ist als eine Rechenressource, die von einer auszuführenden künstlichen Intelligenz-Aufgabengruppe, KI-Aufgabengruppe, benötigt wird, Auswählen von mindestens einer zweiten Einrichtung aus gültigen Einrichtungen in einem ersten Bereich, wobei der erste Bereich ein Bereich ist, der die erste Einrichtung als einen Mittelpunkt und eine gültige Kommunikationsdistanz der ersten Einrichtung als einen Radius verwendet, eine gültige Einrichtung in dem ersten Bereich eine kollaborative Recheneinrichtung ist, die sich in dem ersten Bereich befindet und mit der ersten Einrichtung verbunden ist, und die KI-Aufgabengruppe mindestens eine KI-Aufgabe umfasst;
eine Sendeeinheit (902), die dazu konfiguriert ist, eine Aufgabe in der auszuführenden KI-Aufgabengruppe an jede der mindestens einen zweiten Einrichtung zu senden, wobei, wenn die auszuführende KI-Aufgabengruppe mindestens zwei KI-Aufgaben umfasst, die gesendete Aufgabe einige der mindestens zwei KI-Aufgaben sind oder, wenn die auszuführende KI-Aufgabengruppe eine KI-Aufgabe umfasst, die gesendete Aufgabe einige Unteraufgaben der KI-Aufgabe sind; und
eine Empfangseinheit (903), die dazu konfiguriert ist, ein Ausführungsergebnis der gesendeten Aufgabe von der mindestens einen zweiten Einrichtung zu empfangen,
wobei die gültige Kommunikationsdistanz der ersten Einrichtung eine maximale Distanz zwischen einer Einrichtung, die ein Signal sendet, und der ersten Einrichtung ist, wenn eine Stärke des Signals, das von der ersten Einrichtung empfangen wird, größer als oder gleich einer voreingestellten Stärke ist, **dadurch gekennzeichnet, dass**
die mindestens eine zweite Einrichtung eine Einrichtung der gültigen Einrichtungen in dem ersten Bereich ist, dessen Kommunikationslatenz zwischen der Einrichtung und der ersten Einrichtung kleiner als oder gleich einer voreingestellten Latenz ist;
die mindestens eine zweite Einrichtung eine Einrichtung an einem ersten voreingestellten Ort in einer ersten Sequenz ist und die erste Sequenz eine Sequenz ist, die durch Anordnen der gültigen Einrichtungen in dem ersten Bereich in aufsteigender Reihenfolge oder absteigender Reihenfolge der Kommunikationslatenzen zwischen den gültigen Einrichtungen und der ersten Einrichtung erlangt wird;
die mindestens eine zweite Einrichtung eine Einrichtung der gültigen Einrichtungen in dem ersten Bereich ist, deren Aufenthaltsdauer in dem ersten Bereich größer als oder gleich der voreingestellten Dauer ist; oder
die mindestens eine zweite Einrichtung eine Einrichtung an einem zweiten voreingestellten Standort in einer zweiten Sequenz ist und die zweite Sequenz eine Sequenz ist, die durch Anordnen der gültigen Einrichtungen in dem ersten Bereich in aufsteigender Reihenfolge oder absteigender Reihenfolge der Aufenthaltsdauer in dem ersten Bereich erlangt wird.

6. Erste Einrichtung nach Anspruch 5, wobei
die Verarbeitungseinheit (901) ferner dazu konfiguriert ist, die gültige Einrichtung in dem ersten Bereich basierend auf mindestens einer von Standortinformationen der ersten Einrichtung, ob die erste Einrichtung mit einer Einrichtung in dem ersten Bereich verbunden ist und ob die Einrichtung, die mit der ersten Einrichtung in dem ersten Bereich verbunden ist, eine kollaborative Recheneinrichtung ist, zu aktualisieren.

7. Erste Einrichtung nach Anspruch 5 oder 6, wobei
die Verarbeitungseinheit (901) ferner dazu konfiguriert ist, Informationen über ungenutzte Rechenressourcen der zweiten Einrichtung zu erlangen; und
die Sendeeinheit (902) insbesondere dazu konfiguriert ist, die Aufgabe in der auszuführenden KI-Aufgabengruppe basierend auf den Informationen über ungenutzte Rechenressourcen der zweiten Einrichtung an die zweite Einrichtung zu senden, wobei eine Rechenressource, die für eine an eine beliebige zweite Einrichtung in der mindestens einen zweiten Einrichtung gesendete Aufgabe benötigt wird, kleiner als oder gleich einer ungenutzten Rechenressource der beliebigen zweiten Einrichtung ist.

8. Erste Einrichtung nach einem der Ansprüche 5 bis 7, wobei die verfügbare Rechenressource der ersten Einrichtung eine Rechenressource umfasst, die von der ersten Einrichtung zum Ausführen einer Aufgabe einer anderen Einrichtung verwendet wird; und
die Verarbeitungseinheit (901) ferner zu Folgendem konfiguriert ist: wenn die erste Einrichtung bestimmt, dass die verfügbare Rechenressource der ersten Einrichtung kleiner als oder gleich der Rechenressource ist, die von der auszuführenden KI-Aufgabengruppe benötigt wird, Stoppen des Ausführens einer KI-Aufgabengruppe der anderen Einrichtung, wobei eine Rechenressource, die durch das Stoppen des Ausführens der KI-Aufgabengruppe der anderen Einrichtung freigegeben wird, verwendet wird, um eine andere Aufgabe als die gesendete Aufgabe in der mindestens einen KI-Aufgabengruppe auszuführen.

9. Computerlesbares Speichermedium, umfassend Anweisungen, die, wenn sie durch einen Computer ausgeführt werden, den Computer dazu veranlassen, das Verfahren zur Aufgabenverarbeitung nach einem der Ansprüche 1 bis 4 durchzuführen.

10. Computerprogrammprodukt, umfassend Anweisungen, die, wenn sie durch einen Computer ausgeführt werden, den Computer dazu veranlassen, das Verfahren zur Aufgabenverarbeitung nach einem der Ansprüche 1 bis 4 durchzuführen.

## Revendications

1. Procédé de traitement de tâches, dans lequel le procédé comprend :
lorsqu'un premier dispositif détermine (S403) qu'une ressource informatique disponible du premier dispositif est inférieure à une ressource informatique requise par un groupe de tâches d'intelligence artificielle, IA, à exécuter, la sélection (S405) d'au moins un second dispositif à partir de dispositifs valides dans une première zone, dans lequel la première zone est une zone qui utilise le premier dispositif comme centre et une distance de communication valide du premier dispositif comme rayon, un dispositif valide dans la première zone est un dispositif informatique collaboratif qui se trouve dans la première zone et qui est connecté au premier dispositif, et le groupe de tâches IA comprend au moins une tâche IA ;
l'envoi (S406), par le premier dispositif, d'une tâche dans le groupe de tâches IA à exécuter à chacun de l'au moins un second dispositif, dans lequel si le groupe de tâches IA à exécuter comprend au moins deux tâches IA, la tâche envoyée est une partie des au moins deux tâches IA, ou si le groupe de tâches IA à exécuter comprend une tâche IA, la tâche envoyée représente certaines sous-tâches de la tâche IA ; et
la réception (S408), par le premier dispositif, d'un résultat d'exécution de la tâche envoyée à partir de l'au moins un second dispositif,
dans lequel la distance de communication valide du premier dispositif est une distance maximale entre un dispositif envoyant un signal et le premier dispositif lorsqu'une force du signal reçu par le premier dispositif est supérieure ou égale à une force prédéfinie, **caractérisé en ce que**
l'au moins un second dispositif est un dispositif, parmi les dispositifs valides dans la première zone, dont la latence de communication entre le dispositif et le premier dispositif est inférieure ou égale à une latence prédéfinie ;
l'au moins un second dispositif est un dispositif à un premier emplacement prédéfini dans une première séquence, et la première séquence est une séquence obtenue en agençant les dispositifs valides dans la première zone dans un ordre croissant ou un ordre décroissant de latences de communication entre les dispositifs valides et le premier dispositif ;
l'au moins un second dispositif est un dispositif, parmi les dispositifs valides dans la première zone, dont la durée de séjour dans la première zone est supérieure ou égale à une durée prédéfinie ; ou
l'au moins un second dispositif est un dispositif situé à un second emplacement prédéfini dans une seconde séquence, et la seconde séquence est une séquence obtenue en agençant les dispositifs valides dans la première zone dans un ordre croissant ou un ordre décroissant de durée de séjour dans la première zone.

2. Procédé de traitement de tâches selon la revendication 1, dans lequel le procédé comprend également :
la mise à jour du dispositif valide dans la première zone sur la base d'au moins l'une parmi des informations d'emplacement du premier dispositif, si le premier dispositif est connecté à un dispositif dans la première zone ou si le dispositif connecté au premier dispositif dans la première zone est un dispositif informatique collaboratif.

3. Procédé de traitement de tâches selon la revendication 1 ou 2, dans lequel le procédé comprend également :
l'obtention, par le premier dispositif, d'informations de ressource informatique inactive du second dispositif ; et
l'envoi (S406), par le premier dispositif, d'une tâche dans le groupe de tâches IA à exécuter à chacun de l'au moins un second dispositif comprend :
l'envoi, par le premier dispositif, de la tâche dans le groupe de tâches IA à exécuter au second dispositif sur la base des informations de ressource informatique inactive du second dispositif, dans lequel une ressource informatique requise pour une tâche envoyée à un quelconque second dispositif dans l'au moins un second dispositif est inférieure ou égale à une ressource informatique inactive du quelconque second dispositif.

4. Procédé de traitement de tâches selon l'une quelconque des revendications 1 à 3, dans lequel la ressource informatique disponible du premier dispositif comprend une ressource informatique utilisée par le premier dispositif pour exécuter une tâche d'un autre dispositif, et le procédé comprend également :
lorsque le premier dispositif détermine que la ressource informatique disponible du premier dispositif est inférieure ou égale à la ressource informatique requise par le groupe de tâches IA à exécuter, l'arrêt de l'exécution d'un groupe de tâches IA de l'autre dispositif, dans lequel un recours informatique libéré par l'arrêt de l'exécution du groupe de tâches IA de l'autre dispositif est utilisé pour exécuter une autre tâche autre que la tâche envoyée dans au moins un groupe de tâches IA.

5. Premier dispositif, dans lequel le premier dispositif comprend :
une unité de traitement (901), configurée pour : lorsque le premier dispositif détermine qu'une ressource informatique disponible du premier dispositif est inférieure à une ressource informatique requise par un groupe de tâches d'intelligence artificielle, IA, à exécuter, sélectionner au moins un second dispositif à partir de dispositifs valides dans une première zone, dans lequel la première zone est une zone qui utilise le premier dispositif comme centre et une distance de communication valide du premier dispositif comme rayon, un dispositif valide dans la première zone est un dispositif informatique collaboratif qui se trouve dans la première zone et qui est connecté au premier dispositif, et le groupe de tâches IA comprend au moins une tâche IA ;
une unité d'envoi (902), configurée pour envoyer une tâche dans le groupe de tâches IA à exécuter à chacun de l'au moins un second dispositif, dans lequel si le groupe de tâches IA à exécuter comprend au moins deux tâches IA, la tâche envoyée est une partie des au moins deux tâches IA, ou si le groupe de tâches IA à exécuter comprend une tâche IA, la tâche envoyée représente certaines sous-tâches de la tâche IA ; et
une unité de réception (903), configurée pour recevoir un résultat d'exécution de la tâche envoyée à partir de l'au moins un second dispositif,
dans lequel la distance de communication valide du premier dispositif est une distance maximale entre un dispositif envoyant un signal et le premier dispositif lorsqu'une force du signal reçu par le premier dispositif est supérieure ou égale à une force prédéfinie, **caractérisé en ce que**
l'au moins un second dispositif est un dispositif, parmi les dispositifs valides dans la première zone, dont la latence de communication entre le dispositif et le premier dispositif est inférieure ou égale à une latence prédéfinie ;
l'au moins un second dispositif est un dispositif à un premier emplacement prédéfini dans une première séquence, et la première séquence est une séquence obtenue en agençant les dispositifs valides dans la première zone dans un ordre croissant ou un ordre décroissant de latences de communication entre les dispositifs valides et le premier dispositif ;
l'au moins un second dispositif est un dispositif, parmi les dispositifs valides dans la première zone, dont la durée de séjour dans la première zone est supérieure ou égale à une durée prédéfinie ; ou
l'au moins un second dispositif est un dispositif situé à un second emplacement prédéfini dans une seconde séquence, et la seconde séquence est une séquence obtenue en agençant les dispositifs valides dans la première zone dans un ordre croissant ou un ordre décroissant de durée de séjour dans la première zone.

6. Premier dispositif selon la revendication 5, dans lequel l'unité de traitement (901) est également configurée pour mettre à jour le dispositif valide dans la première zone sur la base d'au moins l'une parmi des informations d'emplacement du premier dispositif, si le premier dispositif est connecté à un dispositif dans la première zone et si le dispositif connecté au premier dispositif dans la première zone est un dispositif informatique collaboratif.

7. Premier dispositif selon la revendication 5 ou 6, dans lequel l'unité de traitement (901) est également configurée pour obtenir des informations de ressource informatique inactive du second dispositif ; et
l'unité d'envoi (902) est spécifiquement configurée pour envoyer la tâche dans le groupe de tâches IA à exécuter au second dispositif sur la base des informations de ressource informatique inactive du second dispositif, dans lequel une ressource informatique requise pour une tâche envoyée à un quelconque second dispositif dans l'au moins un second dispositif est inférieure ou égale à une ressource informatique inactive du quelconque second dispositif.

8. Premier dispositif selon l'une quelconque des revendications 5 à 7, dans lequel la ressource informatique disponible du premier dispositif comprend une ressource informatique utilisée par le premier dispositif pour exécuter une tâche d'un autre dispositif ; et
l'unité de traitement (901) est également configurée pour :
lorsque le premier dispositif détermine que la ressource informatique disponible du premier dispositif est inférieure ou égale à la ressource informatique requise par le groupe de tâches IA à exécuter, arrêter l'exécution d'un groupe de tâches IA de l'autre dispositif, dans lequel un recours informatique libéré par l'arrêt de l'exécution du groupe de tâches IA de l'autre dispositif est utilisé pour exécuter une autre tâche autre que la tâche envoyée dans l'au moins un groupe de tâches IA.

9. Support de stockage lisible par ordinateur comprenant des instructions qui, lorsqu'elles sont exécutées par un ordinateur, amènent l'ordinateur à mettre en œuvre le procédé de traitement de tâches selon l'une quelconque des revendications 1 à 4.

10. Produit de programme informatique comprenant des instructions qui, lorsqu'elles sont exécutées par un ordinateur, amènent l'ordinateur à mettre en œuvre le procédé de traitement de tâches selon l'une quelconque des revendications 1 à 4.
